# EUROPÄISCHE PATENTANMELDUNG

(11) **EP 4 497 516 A1**
(43) Veröffentlichungstag der Anmeldung: **29.01.2025**
(21) Anmeldenummer: 24186729.0
(22) Anmeldetag: 05.07.2024
(51) Int. Cl.: B21D 39/04, B23P 11/00, B25B 27/10, H01R 3/00, H05K 13/00, H01R 4/20, H01R 43/058

(54) **VERFAHREN ZUR HERSTELLUNG EINES ELEKTRISCHEN ODER ELEKTRONISCHEN BAUTEILS UNTER BESTÜCKUNG EINES ELEKTRISCHEN ODER ELEKTRONISCHEN BAUELEMENTS MIT EINEM DIESES UMGEBENDEN METALLISCHEN MANTEL**

(30) Priorität: 25.07.2023 DE 102023119673
(71) Anmelder: Jacob Waitz Industrie GmbH, 34117 Kassel (DE)
(72) Erfinder: BAUMGARTNER, Carsten, 35321 Laubach (DE)
(74) Vertreter: Grättinger Möhring von Poschinger Patentanwälte Partnerschaft mbB

(57) **Zusammenfassung**

Bei einem Verfahren zur Bestückung eines Bauelements (5) mit einem diesen enganliegend umgebenden Mantel (7) werden das Bauelement (5), ein gegenüber diesem Übermaß aufweisender, plastisch verformbarer metallischer Mantelrohling (16) und eine elastisch verformbare Hilfshülse (17), welche gegenüber dem Mantelrohling (16) Übermaß aufweist, zu einer Gruppe zusammengebracht, welche in das mindestens vier mittels einer Antriebseinrichtung synchron in Richtung auf eine Pressachse (X) radial bewegbare Pressbacken (10) aufweisende Presswerkzeug (9) einer Radialpresse (8) eingelegt wird. Das Presswerkzeug (9) wird mindestens einmalig geschlossen unter aufeinander folgendem Anlegen der Pressbacken (10) an der Hilfshülse (17), elastischem radialem Verengen der Hilfshülse (17) zu deren Anlage an dem Mantelrohling (16) und plastischem radialem Verengen des Mantelrohlings (16) zu dessen Anlage an dem Bauelement (5). Beim Öffnen des Presswerkzeugs (9) hebt die elastisch verformbare Hilfshülse (17) von dem durch plastische Umformung aus dem Mantelrohling (16) hervorgegangenen Mantel (6) ab, so dass das fertige Bauteil der Hilfshülse (17) entnommen werden kann.

## Beschreibung

Die vorliegende Erfindung betrifft ein Verfahren zur Herstellung eines elektrischen oder elektronischen Bauteils. Insbesondere betrifft die vorliegende Erfindung ein derartiges Verfahren, bei dem - im Rahmen der Herstellung des betreffenden elektrischen oder elektronischen Bauteils - ein elektrisches oder elektronisches Bauelement mit einem dieses umgebenden metallischen Mantel bestückt wird. In noch weitergehendem Detail betrifft die vorliegende Erfindung ein Verfahren zur Bestückung eines zumindest abschnittsweise zylindrischen elektrischen oder elektronischen Bauelements mit einem diesen enganliegend umgebenden metallischen Mantel.

Bei verschiedenen elektrischen oder elektronischen Bauelementen, welche - insbesondere zu ihrem mechanischen Schutz - von einem metallischen Mantel umgeben zum Einsatz kommen, ist ein definierter mechanischer Kontakt zwischen dem elektrischen bzw. elektronischen Bauelement und dem dieses umgebenden metallischen Mantel funktionsentscheidend. Dies gilt namentlich für Anwendungen, in denen es auf eine gute Wärmeübertragungsfähigkeit zwischen dem elektrischen bzw. elektronischen Bauelement und dem dieses umgebenden Mantel ankommt, beispielsweise weil es sich bei dem elektrischen bzw. elektronischen Bauelement um einen Temperatursensor oder um ein Heizelement handelt. Gerade bei diesen Anwendungen ist aber zugleich eine sehr gute Form- und Maßhaltigkeit der äußeren Oberfläche des elektrischen oder elektronischen Bauteils, d. h. des das elektrische bzw. elektronische Bauelement umgebenden Mantels von hoher Bedeutung, denn typischerweise kommen solche Bauteile in eine jeweilige Bohrung eines Geräteteils eingesetzt zur Anwendung, wobei für die Wärmeübertragungsfähigkeit zwischen dem Mantel des elektrischen bzw. elektronischen Bauteils und dem Geräteteil, in dem dieses aufgenommen ist, dieselben hohen Anforderungen (s. o.) gelten.

Die DE 101 56 299 A1 offenbart eine Verbindungsanordnung und ein Verfahren zum Verbinden eines Anschlusselements mit einem elektrischen Leiter. Dabei wird bei einem elektrischen Kabel, welches einen mit einem Isolationsmantel umgebenen Leiter aufweist, endseitig die Isolierummantelung entfernt und das entsprechende Ende des Leiters in die Durchgangsbohrung eines hohlzylindrischen Anschlusselements eingeführt. Dieses wird anschießend durch Radialumformung einerseits auf den Leiter aufgepresst und andererseits - in seinem über das Ende des Leiters überstehenden Bereich - zur Bildung eines Steckstifts querschnittsreduzierend umgeformt.

Die DE 103 36 408 A1 offenbart ein Verfahren zum Verbinden eines Kontaktelements mit einem Kabel. Dabei wird bei einem elektrischen Kabel, welches einen mit einem Isolationsmantel umgebenen Leiter aufweist, endseitig die Isolierummantelung entfernt und das entsprechende Ende des Leiters in die Einführungsbohrung eines büchsenförmigen Verbindungselements eingeführt. Dieses wird anschießend durch Radialumformung (Rundkneten) auf den eingesteckten Leiter aufgepresst, bevor abschließend das Verbindungselement an dem Kontaktelement - mittels Ultraschallverschweißung - angeschweißt wird.

Auch die WO 2019/199 758 A1 betrifft das Aufpressen der Hülse eines Verbindungselements auf den freiliegenden Endabschnitt des Leiters eines elektrischen Kabels. Dabei weist das dem besagten Aufpressen dienende Werkzeug ein Gesenk mit einer zehneckigen Innenkontur auf.

Aus der DE 10 2017 108 399 A1 ist eine der Radialverformung von Werkstücken dienende Radialpresse bekannt. Diese weist acht um eine Pressachse herum angeordnete, mittels einer Antriebseinheit synchron radial ein- und auswärts bewegbare Grundbacken auf. An diesen sind Pressbacken auswechselbar anbringbar, welche radial innen eine spezifisch an das jeweilige zu verpressende Werkstück angepasste Pressfläche aufweisen.

Die vorliegende Erfindung hat sich zur Aufgabe gemacht einen Weg bereitzustellen, bei dessen Anwendung sich im Hinblick auf die eingangs dargelegte Thematik, nämlich der Bestückung eines zumindest abschnittsweise zylindrischen elektrischen oder elektronischen Bauelements mit einem diesen enganliegend umgebenden metallischen Mantel, bei vergleichsweise geringem fertigungstechnischem Aufwand gute Ergebnisse in der weiter oben aufgezeigten Hinsicht erzielen lassen.

Gelöst wird die vorstehende Aufgabenstellung gemäß der vorliegenden Erfindung durch das in Anspruch 1 angegebene Verfahren, d. h. durch ein Verfahren zur Bestückung eines zumindest abschnittsweise zylindrischen elektrischen oder elektronischen Bauelements mit einem diesen enganliegend umgebenden metallischen Mantel, umfassend die folgenden Schritte:
- Bereitstellen des elektrischen bzw. elektronischen Bauelements und eines hierzu ein Übermaß aufweisenden, zumindest abschnittsweise zylindrischen Mantelrohlings aus einem plastisch verformbaren metallischen Werkstoff;
- Bereitstellen einer zumindest abschnittsweise in axialer Erstreckung geschlitzten, in radialer Richtung federnd nachgiebigen Hilfshülse mit einem gegenüber dem Mantelrohling bestehenden Übermaß;
- Zusammenführen von elektrischem bzw. elektronischem Bauelement, Mantelrohling und Hilfshülse zu einer Gruppe, wobei die Hilfshülse zumindest abschnittsweise mit Spiel den Mantelrohling und dieser zumindest abschnittsweise mit Spiel das elektrische bzw. elektronische Bauelement umgibt;
- Einlegen der Gruppe in den Werkstück-Aufnahmeraum des Presswerkzeugs einer Radialpresse, welches mindestens vier mittels einer Antriebseinrichtung synchron in Richtung auf eine Pressachse radial bewegbare Pressbacken aufweist;
- mindestens einmaliges Schließen des Presswerkzeugs unter aufeinander folgendem Anlegen der Pressbacken an der Hilfshülse, elastischem radialem Verengen der Hilfshülse zu deren Anlage an dem Mantelrohling und plastischem radialem Verengen des Mantelrohlings zu dessen Anlage an dem elektrischen bzw. elektronischen Bauelement;
- Öffnen des Presswerkzeugs unter aufeinander folgendem Abheben der Hilfshülse von dem durch plastische Umformung aus dem Mantelrohling hervorgegangenen Mantel und Abheben der Pressbacken von der Hilfshülse;
- Entnehmen des aus dem elektrischen bzw. elektronischen Bauelement mit dem dieses enganliegend umgebenden metallischen Mantel gefügten Bauteils und der Hilfshülse aus dem Presswerkzeug und Entnehmen des Bauteils aus der Hilfshülse.

Die Erfindung erlaubt es, für die Bestückung eines zumindest abschnittsweise zylindrischen elektrischen oder elektronischen Bauelements mit einem diesen enganliegend umgebenden metallischen Mantel auf etablierte, zuverlässig und mit höchster Präzision arbeitende Radialpressen zurückzugreifen, wie sie in verschiedensten Ausführungen namentlich von der Uniflex-Hydraulik GmbH, DE-61184 Karben hergestellt und vertrieben werden und auch aus umfassender Patentliteratur (vgl. beispielsweise DE 41 35 465 A1, DE 199 12 976 A1 und DE 198 17 882 B4 betreffend Radialpressen in sogenannter "Jochpressen"-Bauweise, DE 101 49 924 A1 betreffend Radialpressen in sogenannter "Hohlkolbenpressen"-Bauweise und DE 28 44 475 A1, DE 36 11 253 A1, DE 100 47 025 C2 und DE 33 31 721 A1 betreffend Radialpressen in sonstiger Bauweise) bekannt sind. Die im Rahmen des erfindungsgemäßen Verfahrens beim Verformen des Mantelrohlings, um diesen in einen an dem elektrischen bzw. elektronischen Bauelement enganliegenden Mantel zu überführen, zum Einsatz kommende Hilfshülse, welche sich beim Pressvorgang zwischen den Pressbacken des Presswerkezugs der Radialpresse und dem Mantelrohling, letzteren umgebend, erstreckt, wirkt dabei effektiv der Ausbildung von Graten bzw. Stegen entgegen, welche ohne Verwendung besagter Hilfshülse durch beim Pressvorgang verdrängtes Material des Mantelrohlings auf dessen Oberfläche jeweils zwischen zwei einander benachbarten Pressbacken entstehen würden. Insoweit lässt sich in Anwendung der vorliegenden Erfindung ohne Nachbearbeitung der Oberfläche des fertigen elektrischen oder elektronischen Bauteils eine solche Güte bzw. Qualität eben jener Oberfläche erreichen, die ohne die erfindungsgemäße Verwendung einer Hilfshülse sich nur über eine aufwändige Nachbearbeitung erzielen ließe.

Indem bei der plastischen Umformung des Mantelrohlings die Verdrängung von dessen Material in die jeweils zwischen zwei einander benachbarten Pressbacken bestehenden Spalte hinein wirksam unterbunden wird, ist auch der Moment, an dem der Mantelrohling während seiner Umformung zur Anlage an dem elektrischen bzw. elektronischen Bauelement kommt, durch einen entsprechend scharfkantig ausgeprägten Kraft- bzw. Druckanstieg in der Antriebseinheit der Radialpresse besonders genau detektierbar. Das erlaubt eine besonders präzise Steuerung der Radialpresse im Sinne eines werkstückspezifischen Abbruchs bzw. einer werkstückspezifischen Beendigung der Schließbewegung. Dies bewahrt das elektrische bzw. elektronische Bauelement vor einer mechanischen Überlastung, was gerade bei elektrischen und elektronischen Bauelementen mit (typischerweise spröden) Keramikstrukturen ein unschätzbarer fertigungstechnischer Vorteil ist.

Soweit es bei der Umformung des Mantelrohlings auf dessen Oberfläche dort, wo mit dieser der geschlitzte Bereich der Hilfshülse zusammenwirkt, zur Ausbildung eines Grats bzw. Stegs aus verdrängtem Material des Mantelrohlings kommt, kann eine besonders bevorzugte Weiterbildung des erfindungsgemäßen Verfahrens zur Anwendung kommen, welche sich durch mehrmaliges aufeinanderfolgendes Schließen des Presswerkzeugs auszeichnet, wobei zwischen zwei Schließvorgängen das Presswerkzeug zumindest teilweise geöffnet und der in dem vorausgegangenen Schließvorgang verformte Mantelrohling bzw. der aus dem Mantelrohling hervorgegangene Mantel gegenüber der Hilfshülse gedreht wird. So kommt der in dem ersten bzw. vorausgegangenen Schließvorgang entstandene Grat bzw. Steg für den zweiten bzw. nachfolgenden Schließvorgang unter dem nichtgeschlitzten Bereich der Hilfshülse zu liegen, wodurch der Grat bzw. Steg wieder egalisiert wird.

Ganz besonders vorteilhaft ist dabei, wenn das Presswerkzeug zwischen den beiden Schließvorgängen dergestalt, d. h. genau so weit teilgeöffnet wird, dass die Pressbacken weiterhin an der Hilfshülse anliegen, diese aber von dem beim vorausgegangenen Schließvorgang plastisch umgeformten Mantelrohling bzw. dem aus dem Mantelrohling hervorgegangenen Mantel abhebt. So halten die Pressbacken die Hilfshülse, wodurch ohne händisches bzw. anderweitiges Festhalten der Hilfshülse das aus elektrischem bzw. elektronischem Bauelement und teilverformtem Mantelrohling (bzw. der aus dem Mantelrohling hervorgegangenen Mantel) bestehende Zwischenprodukt problemlos (beispielsweise um 180°) in der - durch die Pressbacken festgehaltenen - Hilfshülse um seine Achse gedreht werden kann, bevor der zweite bzw. weitere Schließvorgang der Radialpresse eingeleitet wird.

Im Interesse einer besonders homogenen Verpressung, wie sie gerade für Keramikstrukturen enthaltende elektrische bzw. elektronische Bauelemente von erheblicher praktischer Bedeutung ist, kann besonders vorteilhaft sein, wenn bei der Durchführung des erfindungsgemäßen Verfahrens ein mindestens acht Pressbacken aufweisendes Presswerkzeug zum Einsatz kommt. Auf der anderen Seite können sich für die Durchführung des erfindungsgemäßen Verfahrens auch solche Radialpressen als günstig erweisen, deren Presswerkzeug nur vier Pressbacken aufweist. Der Vorteil dieser Ausgestaltung besteht in der geringeren Anzahl an über den Umfang des Presswerkzeugs verteilten, jeweils zwischen zwei Pressbacken bestehenden Spalten und somit - verglichen mit einer größeren Anzahl an Pressbacken - größeren Gesamtfläche, mit der die Pressbacken an der Hilfshülse anliegen und auf diese einwirken.

Was die Hilfshülse angeht, so ist besonders vorteilhaft, wenn diese aus Federstahl besteht. Denn die elastisch federnde Nachgiebigkeit der Hilfshülse dergestalt, dass diese nach der (plastischen) Umformung des Mantelrohlings beim Öffnen der Radialpresse wieder vollständig zurückfedert und ihre ursprüngliche Gestalt annimmt, ist unter zwei Gesichtspunkten entscheidend. So kann das fertige elektrische bzw. elektronische Bauteil problemlos aus der Hilfshülse entnommen werden; und diese kann ohne Nachbearbeitung für die nächste Verwendung bereitgehalten werden.

Die - beim Umformen des Mantelrohling mit diesem in Kontakt stehende - Innenfläche der Hilfshülse ist für typische Anwendungsfälle der vorliegenden Erfindung bevorzugt ideal glatt und frei von Rauigkeiten. Indessen können auf ihr auch gezielt definierte Erhebungen und/oder Vertiefungen ausgeführt sein, um auf diese Weise beim in der Radialpresse erfolgenden Umformen des Mantelrohlings auf dessen Oberfläche korrespondierende Vertiefungen bzw. Erhebungen einzuprägen.

Im Einzelfall kann sich bei Anwendung des erfindungsgemäßen Verfahrens die Verwendung einer - in diesem Fall zumindest einseitig aus dem Presswerkzeug herausragenden - Hilfshülse als günstig erweisen, welche nicht über ihre gesamte Länge in axialer Erstreckung geschlitzt ist, sondern bei der der Schlitz an mindestens einem Endbereich der Hilfshülse vor deren Stirnseite endet. In der ganz überwiegenden Anzahl der Anwendungsfälle erweist sich indessen die Verwendung einer über ihre gesamte Länge in axialer Erstreckung geschlitzten Hilfshülse als vorteilhaft.

Hinsichtlich der Ausführung des Schlitzes der Hilfshülse besteht im Rahmen der vorliegenden Erfindung ein nicht unerheblicher Gestaltungsspielraum, und zwar sowohl hinsichtlich des generellen Verlaufs als auch hinsichtlich der - dem jeweiligen generellen Verlauf überlagerten - Fein-Profilierung der beiden den Schlitz begrenzenden Ränder. So zeichnet sich eine erste bevorzugte Weiterbildung der vorliegenden Erfindung dadurch aus, dass eine Hilfshülse mit einem generell parallel zu deren Achse orientierten Schlitz zum Einsatz kommt. Dies ist eine herstellungstechnisch besonders einfache Variante. Herstellungstechnisch ggf. etwas anspruchsvoller, allerdings - unter dem Blickwinkel einer möglichst homogenen Spannungsverteilung innerhalb des herzustellenden elektrischen bzw. elektronischen Bauteils - im Hinblick auf die Funktion mit Vorteilen verbunden ist die Verwendung von Hilfshülsen mit einem gewendelten, d. h. generell entlang einer Schraubenlinie verlaufenden Schlitz. Die Steigung der Schraubenlinie ist dabei vorteilhafterweise so gewählt, dass der Schlitz auf der Oberfläche der Hilfshülse mindestens einen vollständigen Umlauf (360°), besonders bevorzugt mindestens zwei vollständige Umläufe (720°) vollzieht.

Was die dem generellen Verlauf des Schlitzes (s. o.) überlagerte Ausgestaltung der den Schlitz begrenzenden Ränder der Hilfshülse angeht, so sind neben unprofilierten Kanten auch verschiedene Variationen mit profilierten Kanten denkbar und mit Vorteil einsetzbar. Insbesondere können im Rahmen einer bevorzugten Weiterbildung der vorliegenden Erfindung Hilfshülsen zum Einsatz kommen, bei denen die den Schlitz begrenzenden Ränder zueinander korrespondierend gewellt ausgeführt sind. Gemäß einer anderen, besonders bevorzugten Ausgestaltung können Hilfshülsen zum Einsatz kommen, bei denen an den beiden den Schlitz begrenzenden Rändern ineinandergreifende Finger-Profilierungen mit einander wechselweise überlappenden Fingern ausgeführt sind; die durch den "Schlitz" bereitgestellte Möglichkeit der radialen Verengung der Hilfshülse ist auf diese Weise auf eine Mehrzahl von in Umfangsrichtung zueinander versetzten Schlitzabschnitten aufgeteilt. Im Falle der Ausführung der Hilfshülse mit einem gewendelten, generell entlang einer Schraubenlinie verlaufenden Schlitz (s. o.) kann, abhängig von der Steigung der Schraubenlinie, eine gestufte Ausbildung der beiden den Schlitz begrenzenden Ränder mit einander überlappenden Stufen sehr vorteilhaft sein. Auch hier ist, ebenso wie im Falle der vorstehend erläuterten Variante mit ineinandergreifenden Finger-Profilierungen, die durch den "Schlitz" bereitgestellte Möglichkeit der radialen Verengung der Hilfshülse auf eine Mehrzahl von in Umfangsrichtung zueinander versetzten Schlitzabschnitten aufgeteilt. Für die meisten üblichen Anwendungen ebenfalls mit sehr gutem Ergebnis einsetzbar sind Hilfshülsen mit einem gewendelten, generell entlang einer Schraubenlinie verlaufenden Schlitz, wobei die den Schlitz begrenzenden Ränder einen schraubenförmigen Spalt definierend parallel zueinander gewendelt sind. Diese Ausführungsform zeichnet sich durch eine besonders einfache Herstellbarkeit - durch Wickeln aus einem beispielsweise aus Federstahl bestehenden Blechstreifen - aus.

Die den Schlitz begrenzenden Ränder der Hilfshülse können, gemäß einer abermals anderen bevorzugten Ausgestaltung, dergestalt angeschrägt sein, dass sie einander in Umfangsrichtung überlappen bzw. überdecken. Dies gilt insbesondere für Hilfshülsen mit einem generell parallel zur Achse der Hilfshülse orientierten Schlitz. Auch dies ist eine Maßnahme, die zu einer reduzierten Gefahr der Grat- bzw. Stegbildung im Bereich des Schlitzes der Hilfshülse beizutragen geeignet ist. Vorsorglich ist darauf hinzuweisen, dass sie die vorstehenden Erläuterungen betreffend die geometrische bzw. konstruktive Ausführung der Hilfshülse auf deren spannungsfreien, d. h. sich bei Abwesenheit äußerer Kräfte (außer der Gravitation) einstellenden Zustand beziehen.

Im Folgenden wird die vorliegende Erfindung anhand mehrerer in der Zeichnung veranschaulichter bevorzugter Ausführungsbeispiele näher erläutert. Dabei zeigt
- Fig. 1: ein in Anwendung des erfindungsgemäßen Verfahrens herzustellendes elektrisches Bauteil,
- Fig. 2: in einem Axialschnitt eine bei der Herstellung des Bauteils nach Fig. 1 einsetzbare Radialpresse,
- Fig. 3: in einem achsnormalen Querschnitt den maßgeblichen Bereich der Radialpresse nach Fig. 2 während der Herstellung des Bauteils nach Fig. 1 in einem ersten Verfahrensstadium,
- Fig. 4: einen Fig. 3 entsprechenden Querschnitt in einem zweiten Verfahrensstadium der Herstellung des Bauteils nach Fig. 1,
- Fig. 5: eine erste bevorzugte Ausführungsform einer bei der Herstellung des Bauteils nach Fig. 1 mithilfe der Radialpresse nach Fig. 2 einsetzbaren Hilfshülse,
- Fig. 6: eine zweite bevorzugte Ausführungsform einer bei der Herstellung des Bauteils nach Fig. 1 mithilfe der Radialpresse nach Fig. 2 einsetzbaren Hilfshülse,
- Fig. 7: eine dritte bevorzugte Ausführungsform einer bei der Herstellung des Bauteils nach Fig. 1 mithilfe der Radialpresse nach Fig. 2 einsetzbaren Hilfshülse und
- Fig. 8: eine vierte bevorzugte Ausführungsform einer bei der Herstellung des Bauteils nach Fig. 1 mithilfe der Radialpresse nach Fig. 2 einsetzbaren Hilfshülse.

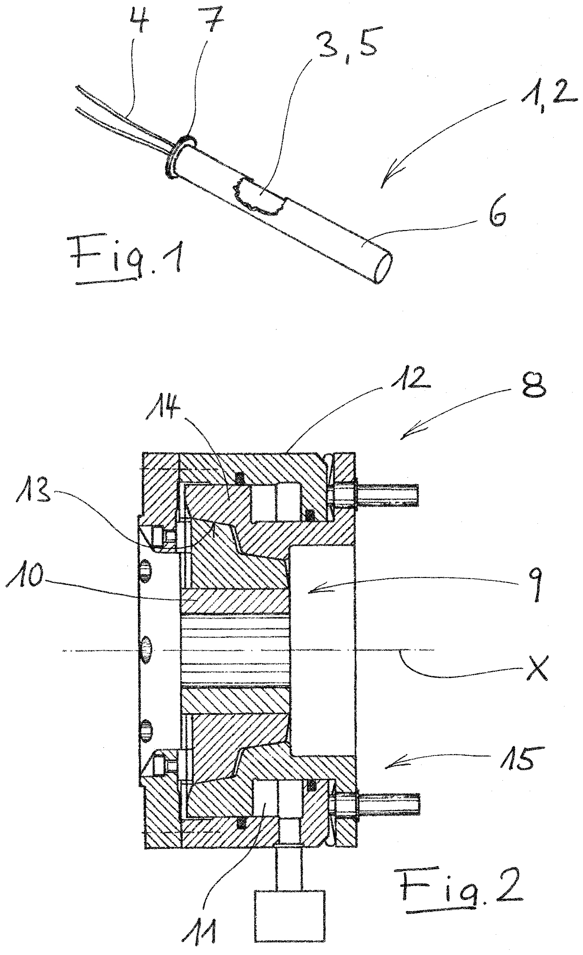

Das in Fig. 1 veranschaulichte elektrische Bauteil 1 in Form eines Temperatursensors 2 umfasst in als solches bekannter Weise ein als Sensorelement 3 ausgeführtes, Anschlussdrähte 4 aufweisendes elektrisches Bauelement 5 von zylindrischer Gestalt. Dieses ist in dem Sinne mit einem Mantel 6 bestückt, dass es enganliegend von einem metallischen Mantel 6 umgeben ist. Für die spätere lagegerechte Platzierung des Temperatursensors 2 in einer in einem Geräteteil vorgesehenen Bohrung weist der Mantel 6 einen Kragen 7 auf.

Zur Herstellung des Temperatursensors 2 kommt eine handelsübliche Radialpresse zum Einsatz, wie sie - in einem Axialschnitt - beispielhaft in Fig. 2 veranschaulicht ist. Die in Fig. 2 illustrierte, als solches bekannte Radialpresse ist in der DE 28 44 475 A1 ausgiebig beschrieben und erläutert. Aus diesem Grund und namentlich auch deshalb, weil es auf bauliche Details der Radialpresse vorliegend nicht ankommt, erübrigt sich eine eingehende Beschreibung. Vielmehr genügt für das Verständnis der vorliegenden Erfindung das Wissen, dass die Radialpresse 8 ein Presswerkzeug 9 mit acht Pressbacken 10 aufweist, welche mittels einer - hier hydraulischen, einen über einen ringförmigen hydraulischen Arbeitsraum 11 beaufschlagbaren, in dem Gehäuse 12 längs der Pressachse X verschiebbaren, bezüglich der Pressachse X geneigte Steuerflächen 13 aufweisenden Ringkolben 14 umfassenden - Antriebseinheit 15 synchron radial in Richtung auf die Pressachse X bewegbar sind. Es wird nochmals betont, dass Fig. 2 lediglich beispielhaft eine mögliche Bauweise der Radialpresse zeigt. Für die Umsetzung der vorliegenden Erfindung eignen sich sämtliche bekannten und um Handel erhältlichen Radialpressen, namentlich sämtliche Radialpresse der Uniflex-Hydraulik GmbH, DE-61184 Karben.

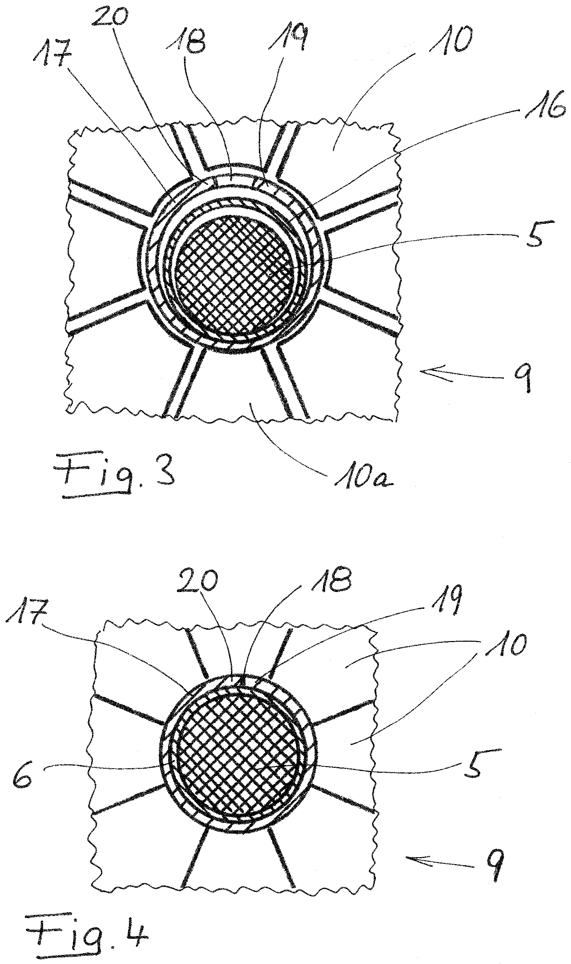

Fig. 3 zeigt (schematisch, d. h. nicht zwingend maßstabsgerecht) die Situation vor Beginn der in der Radialpresse 8 durchgeführten Umformung. Und zwar ist das elektrische Bauelement 5 in einem dieses umgebenden, abgesehen von dem Kragen 7 zylindrischen Mantelrohling 16 aufgenommen. Dabei besteht Spiel zwischen dem elektrischen Bauelement 5 und dem Mantelrohling 16; mit anderen Worten weist der Mantelrohling 16 gegenüber dem elektrischen Bauelement 5 ein Übermaß auf, so dass letzteres locker in den Mantelrohling 16 eingelegt ist. Der Mantelrohling 16 besteht dabei aus einem plastisch verformbaren metallischen Werkstoff.

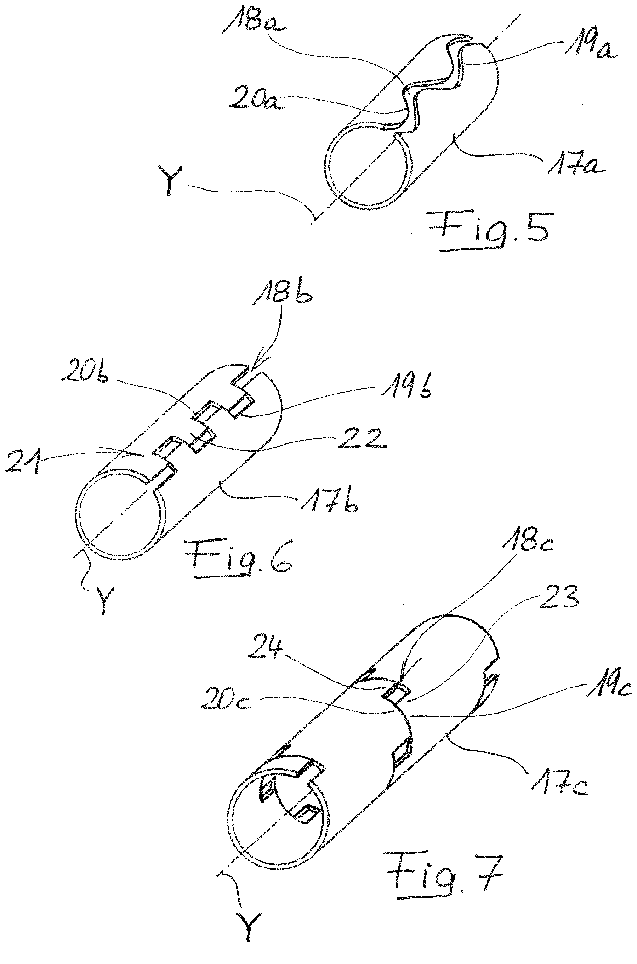

Der Mantelrohling 16 ist seinerseits in einer ihn umgebenden, aus Federstahl bestehende Hilfshülse 17 aufgenommen. Diese - in axialer Erstreckung geschlitzte, in radialer Richtung elastisch-federnd nachgiebige - Hilfshülse 17 (vgl. Figuren 5-7) weist ein gegenüber dem Mantelrohling 16 bestehendes Übermaß auf; sie umgibt somit den Mantelrohling 16 locker, d. h. mit Spiel.

Die Gesamtheit (Gruppe) aus Hilfshülse 17, Mantelrohling 16 und elektrischem Bauelement 5 ist in den Werkstück-Aufnahmeraum des Presswerkzeugs 9 der Radialpresse 8 eingelegt; sie ist somit von den acht Pressbacken 10 umgeben. Gezeigt ist die Situation, wenn besagte Gruppe aus Hilfshülse 17, Mantelrohling 16 und elektrischem Bauelement 5 auf der unteren Pressbacke 10a abgelegt ist.

Fig. 4 zeigt die Situation am Ende des Schließvorgangs des Presswerkzeugs 9. Während des Schließens des Presswerkzeugs 9 und somit synchroner radialer Bewegung der Pressbacken 10 radial nach innen in Richtung auf die Pressachse X beginnend mit der in Fig. 3 gezeigten Ausgangssituation erfolgt nacheinander ein Anlegen der Pressbacken 10 an der Hilfshülse 17, ein erstes elastisches radiales Verengen der Hilfshülse 17 bis zu deren Anlage an dem Mantelrohling 16 und ein fortgesetztes elastisches radiales Verengen der Hilfshülse 17 bei gleichzeitigem plastischem radialem Verengen des Mantelrohlings 16 bis zu dessen Anlage - als Mantel 6 - an dem elektrischen Bauelement 5 (vgl. Fig. 4) .

Beim anschließenden Öffnen des Presswerkzeugs 9 hebt die - elastisch-federnd verengte - Hilfshülse 17 von dem durch plastische Umformung aus dem Mantelrohling 16 hervorgegangenen Mantel 6 ab. Nachdem die sich rückfedernd weitende Hilfshülse 17 wieder ihre ursprüngliche Gestalt erreicht hat, heben die Pressbacken 10 bei fortgesetztem Öffnen des Presswerkzeugs 9 von der Hilfshülse 17 ab. So können das - aus dem mit dem enganliegenden Mantel 6 bestückten elektrischen Bauelement 5 bestehende - elektrische Bauteil 1 sowie die Hilfshülse 17 (gleichzeitig oder nacheinander) aus dem Presswerkzeug 9 entnommen werden. Bei gleichzeitiger Entnahme von elektrischem Bauteil 1 und Hilfshülse 17 aus dem geöffneten Presswerkzeug 9 wird anschließend gesondert das elektrische Bauteil 1 der Hilfshülse 17 entnommen.

Die Figuren 5-8 zeigen vier bevorzugte Ausgestaltungen einer elastisch-federnden, aus Federstahl bestehenden Hilfshülse 17. Alle vier Hilfshülsen-Ausgestaltungen sind jeweils über ihre gesamte Länge in axialer Erstreckung geschlitzt; der jeweilige Schlitz 18 erstreckt sich somit von einer Stirnseite der Hilfshülse 17 bis zur anderen.

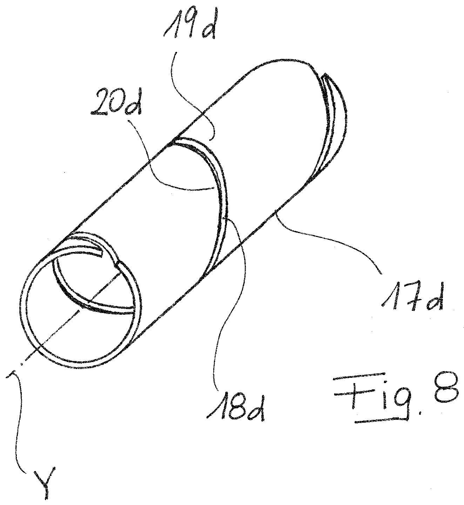

Bei den beiden Ausgestaltungen nach den Figuren 5 und 6 ist der jeweilige Schlitz 18a, 18b generell parallel zur Achse Y der Hilfshülse 17a, 17b orientiert. Demgegenüber verfügen die Hilfshülsen 17c und 17d nach den Figuren 7 und 8 über einen generell wendelförmigen Schlitz 18c bzw. 18d, d. h. der Schlitz 18c, 18d verläuft generell entlang einer Schraubenlinie.

Die Figuren 5-7 veranschaulichen im Übrigen drei dem generellen Verlauf des Schlitzes 18 überlagerte Profilierungen der den jeweiligen Schlitz 18 begrenzenden Ränder 19, 20 der jeweiligen Hilfshülse 17. Nach Fig. 5 sind die beiden den Schlitz begrenzenden Ränder 19a, 20a der Hilfshülse 17a zueinander korrespondierend gewellt ausgeführt. Bei der in Fig. 6 gezeigten Ausgestaltung sind an den beiden den Schlitz 18b begrenzenden Rändern 19b, 20b der Hilfshülse 17b ineinandergreifende Finger-Profilierungen 21 mit einander wechselweise überlappenden Fingern 22 ausgeführt. Und bei der Hilfshülse 17c nach Fig. 7 sind die beiden den Schlitz 18c begrenzenden Ränder 19c, 20c gestuft mit einander überlappenden Stufen 23, 24 ausgeführt.

Bei der Hilfshülse 17d nach Fig. 8 liegen demgegenüber nicht-profilierte den Schlitz 18d begrenzende Ränder 19d, 20d vor. So sind die den Schlitz 18d begrenzenden Ränder 19d, 20d parallel zueinander schraubenförmig gewendelt; sie begrenzen einen durchgehenden schraubenlinienförmigen Spalt von definierter Breite.

Übereinstimmend gestatten sämtliche Schlitz-Varianten ein definiertes radiales Verengen der jeweiligen Hilfshülse 17a, 17b, 17c bzw. 17d.

## Patentansprüche

1. Verfahren zur Bestückung eines zumindest abschnittsweise zylindrischen elektrischen oder elektronischen Bauelements (5) mit einem diesen enganliegend umgebenden metallischen Mantel (7), mit den folgenden Schritten:
- Bereitstellen des elektrischen oder elektronischen Bauelements (5) und eines hierzu ein Übermaß aufweisenden, zumindest abschnittsweise zylindrischen Mantelrohlings (16) aus einem plastisch verformbaren metallischen Werkstoff;
- Bereitstellen einer zumindest abschnittsweise in axialer Erstreckung geschlitzten, in radialer Richtung federnd nachgiebigen Hilfshülse (17) mit einem gegenüber dem Mantelrohling (16) bestehenden Übermaß;
- Zusammenführen von elektrischem oder elektronischem Bauelement (5), Mantelrohling (16) und Hilfshülse (17) zu einer Gruppe, wobei die Hilfshülse (17) zumindest abschnittsweise mit Spiel den Mantelrohling (16) und dieser zumindest abschnittsweise mit Spiel das elektrische bzw. elektronische Bauelement (5) umgibt;
- Einlegen der Gruppe in den Werkstück-Aufnahmeraum des Presswerkzeugs (9) einer Radialpresse (8), welches mindestens vier mittels einer Antriebseinrichtung (15) synchron in Richtung auf eine Pressachse (X) radial bewegbare Pressbacken (10) aufweist;
- mindestens einmaliges Schließen des Presswerkzeugs (9) unter aufeinander folgendem Anlegen der Pressbacken (10) an der Hilfshülse (17), elastischem radialem Verengen der Hilfshülse (17) zu deren Anlage an dem Mantelrohling (16) und plastischem radialem Verengen des Mantelrohlings (16) zu dessen Anlage an dem elektrischen oder elektronischen Bauelement (5);
- Öffnen des Presswerkzeugs (9) unter aufeinander folgendem Abheben der Hilfshülse (17) von dem durch plastische Umformung aus dem Mantelrohling (16) hervorgegangenen Mantel (6) und Abheben der Pressbacken (10) von der Hilfshülse (17);
- Entnehmen des aus dem elektrischen oder elektronischen Bauelement (5) mit dem dieses enganliegend umgebenden metallischen Mantel (6) gefügten Bauteils (1) und der Hilfshülse (17) aus dem Presswerkzeug (9) und Entnehmen des Bauteils (1) aus der Hilfshülse (17).

2. Verfahren nach Anspruch 1, **gekennzeichnet durch** mehrmaliges aufeinanderfolgendes Schließen des Presswerkzeugs (9), wobei zwischen zwei Schließvorgängen das Presswerkzeug (9) zumindest teilweise geöffnet und der in dem vorausgegangenen Schließvorgang verformte Mantelrohling (16) oder der aus dem Mantelrohling (16) hervorgegangene Mantel (6) gegenüber der Hilfshülse (17) gedreht wird.

3. Verfahren nach Anspruch 2, **dadurch gekennzeichnet, dass** das Presswerkzeug (9) zwischen zwei Schließvorgängen dergestalt teilgeöffnet wird, dass die Pressbacken (10) weiterhin an der Hilfshülse (10) anliegen, diese aber von dem beim vorausgegangenen Schließvorgang plastisch umgeformten Mantelrohling (16) oder dem aus dem Mantelrohling (16) hervorgegangenem Mantel (6) abhebt.

4. Verfahren nach einem der Ansprüche 1 bis 3, **dadurch gekennzeichnet, dass** ein mindestens acht Pressbacken (10) aufweisendes Presswerkzeug (9) zum Einsatz kommt.

5. Verfahren nach einem der Ansprüche 1 bis 4, **dadurch gekennzeichnet, dass** eine aus Federstahl bestehende Hilfshülse (17) zum Einsatz kommt.

6. Verfahren nach einem der Ansprüche 1 bis 5, **dadurch gekennzeichnet, dass** eine über ihre gesamte Länge in axialer Erstreckung geschlitzte Hilfshülse (17) zum Einsatz kommt.

7. Verfahren nach einem der Ansprüche 1 bis 6, **dadurch gekennzeichnet, dass** eine Hilfshülse (17a, 17b) mit einem generell parallel zur Achse (Y) der Hilfshülse (17a, 17b) orientierten Schlitz (18a, 18b) zum Einsatz kommt.

8. Verfahren nach einem der Ansprüche 1 bis 6, **dadurch gekennzeichnet, dass** eine Hilfshülse (17c, 17d) mit einem generell entlang einer Schraubenlinie verlaufenden Schlitz (18c, 18d) zum Einsatz kommt.

9. Verfahren nach einem der Ansprüche 1 bis 8, **dadurch gekennzeichnet, dass** eine Hilfshülse (17a) zum Einsatz kommt, bei der die den Schlitz (18a) begrenzenden Ränder (19a, 20a) zueinander korrespondierend gewellt ausgeführt sind.

10. Verfahren nach einem der Ansprüche 1 bis 8, **dadurch gekennzeichnet, dass** eine Hilfshülse (17b) zum Einsatz kommt, bei der an den beiden den Schlitz (18b) begrenzenden Rändern (19b, 20b) ineinandergreifende Finger-Profilierungen (21) mit einander wechselweise überlappenden Fingern (22) ausgeführt sind.

11. Verfahren nach Anspruch 8, **dadurch gekennzeichnet, dass** eine Hilfshülse (17c) zum Einsatz kommt, bei der die den Schlitz (18c) begrenzenden Ränder (19c, 20c) gestuft mit einander überlappenden Stufen (23, 24) ausgeführt sind.

12. Verfahren nach Anspruch 8, **dadurch gekennzeichnet, dass** eine Hilfshülse (17d) zum Einsatz kommt, bei der die den Schlitz (18d) begrenzenden Ränder (19d, 20d) einen Spalt begrenzend parallel zueinander schraubenförmig gewendelt sind.
